(19) Europäisches Patentamt / European Patent Office / Office européen des brevets

(11) EP 4 559 950 A1

(12) EUROPEAN PATENT APPLICATION
published in accordance with Art. 153(4) EPC

(43) Date of publication:
28.05.2025 Bulletin 2025/22

(21) Application number: 23842951.8

(22) Date of filing: 18.07.2023

(51) International Patent Classification (IPC):
C08G 64/00 (2006.01) C08G 63/00 (2006.01)
C08G 63/672 (2006.01) G02B 1/04 (2006.01)

(52) Cooperative Patent Classification (CPC):
C08G 63/00; C08G 63/672; C08G 64/00; G02B 1/04

(86) International application number:
PCT/JP2023/026186

(87) International publication number:
WO 2024/019028 (25.01.2024 Gazette 2024/04)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 19.07.2022 JP 2022114690

(71) Applicant: MITSUBISHI GAS CHEMICAL COMPANY, INC.
Chiyoda-ku
Tokyo 100-8324 (JP)

(72) Inventors:
- KATO Noriyuki
Tokyo 100-8324 (JP)
- NISHIMORI Katsushi
Tokyo 125-8601 (JP)
- MOTEGI Atsushi
Tokyo 125-8601 (JP)
- ISHIHARA Kentaro
Tokyo 100-8324 (JP)
- MURATA SUZUKI Shoko
Tokyo 125-8601 (JP)
- HARADA Yutaro
Tokyo 125-8601 (JP)

(74) Representative: Hoffmann Eitle
Patent- und Rechtsanwälte PartmbB
Arabellastraße 30
81925 München (DE)

# (54) THERMOPLASTIC RESIN AND OPTICAL MEMBER

(57) According to one embodiment, provided is a thermoplastic resin, comprising a constituent unit (A) derived from a monomer represented by the following general formula (1) and a constituent unit (C) derived from a monomer represented by the following general formula (3):

[Formula 1]

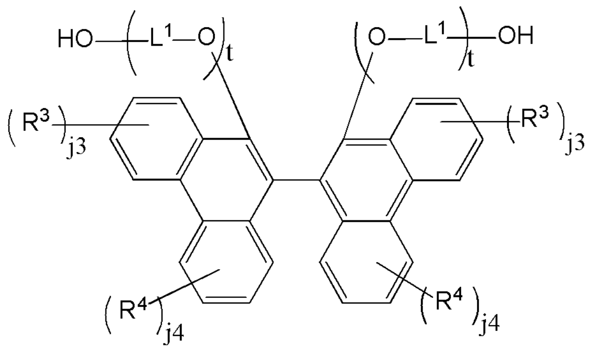

(1)



Processed by Luminess, 75001 PARIS (FR)

(Cont. next page)

[Formula 2]

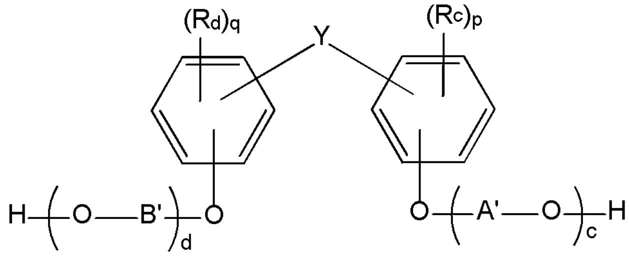

(3)

## Description

### Technical Field

The present invention relates to a thermoplastic resin and an optical member comprising the same.

### Background Art

As materials for optical lenses used in the optical systems of various types of cameras such as a camera, a film-integrated camera and a video camera, optical glasses or optical resins have been used. Such optical glasses are excellent in heat resistance, transparency, dimensional stability, chemical resistance and the like. However, the optical glasses are problematic in terms of high material costs, poor formability and low productivity.

On the other hand, an optical lens consisting of an optical resin is advantageous in that it can be produced in a large amount by injection molding. For example, a polycarbonate resin, etc. is used in camera lenses. However, in recent years, the development of a resin with a high refractive index has been demanded due to the trend toward lighter, thinner, and smaller products. In general, when the refractive index of an optical material is high, a lens element with the same refractive index can be realized on a surface with smaller curvature, thereby enabling a reduction in the amount of aberration generated on this surface. As a result, it becomes possible to reduce the number of lenses, to reduce the eccentricity sensitivity of lenses, and to reduce the thickness of a lens thereby reducing the weight of the lens.

Moreover, in general, in the optical system of cameras, aberration correction is performed by combining multiple concave lenses and convex lenses. That is to say, the chromatic aberration created by the convex lens is synthetically cancelled by combining a concave lens with a chromatic aberration having a sign opposite to that of the convex lens. In this case, the concave lens is required to have high dispersion (i.e., low Abbe number).

Thus, a resin for optical lenses, which has a high refractive index and a low Abbe number, has been developed. For example, Patent Literature 1 discloses an optical lens consisting of a polycarbonate resin comprising a constituent unit derived from bisphenol A. In addition, Patent Literature 2 discloses that a polycarbonate resin having a fluorene structure is excellent in terms of refractive index and birefringence, and that this polycarbonate resin is useful as an optical material.

Furthermore, in recent years, it has been desired to develop a resin having a small absolute value of birefringence strength, in order to provide an optical member with higher performance. Use of such a resin in an optical lens leads to the improvement of the imaging performance of the final lens unit, and a clear image can be thereby obtained.

### Citation List

#### Patent Literature

Patent Literature 1: Japanese Patent No. 5245824
Patent Literature 2: JP Patent Publication (Kokai) No.6-25398 A
Patent Literature 3: International Publication No. WO2021/220811

### Summary of Invention

#### Technical Problem

It is an object of the present invention to provide a thermoplastic resin useful as an optical material, and an optical member comprising the same.

#### Solution to Problem

As a result of intensive studies, the present inventors have found that a thermoplastic resin comprising a combination of specific constituent units has physical properties such as refractive index, Abbe number, and birefringence strength, which are preferable, in particular, for optical materials. The present invention is, for example, as follows.

[1] A thermoplastic resin, comprising a constituent unit (A) derived from a monomer represented by the following general formula (1) and a constituent unit (C) derived from a monomer represented by the following general formula (3):

[Formula 1]

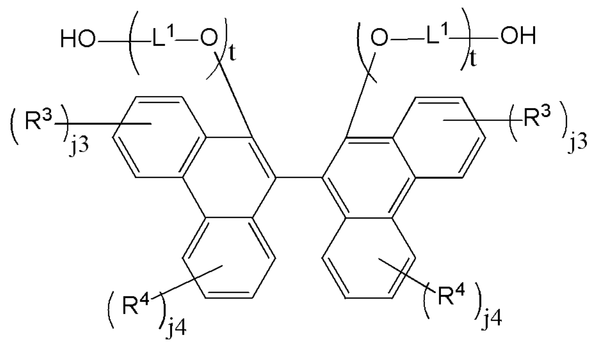

(1)

wherein

$L^1$ each independently represents a divalent linking group;
$R^3$ and $R^4$ each independently represent a halogen atom, or a substituent containing 1 to 20 carbon atoms that optionally contains an aromatic group;
j3 and j4 each independently represent an integer of 0 to 4; and
t represents an integer of 0 or 1; and

[Formula 2]

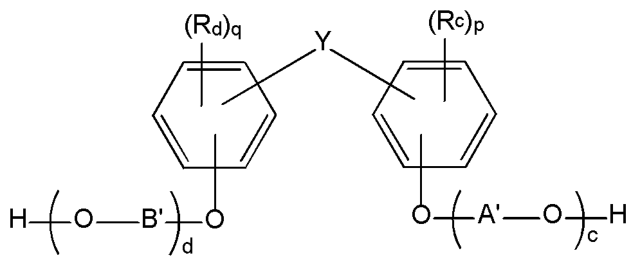

(3)

wherein
A' and B' each independently represent an alkylene group containing 1 to 5 carbon atoms that optionally has a substituent,
$R_c$ and $R_d$ are each independently selected from the group consisting of a halogen atom, an alkyl group containing 1 to 20 carbon atoms that optionally has a substituent, an alkoxyl group containing 1 to 20 carbon atoms that optionally has a substituent, a cycloalkyl group containing 5 to 20 carbon atoms that optionally has a substituent, a cycloalkoxyl group containing 5 to 20 carbon atoms that optionally has a substituent, an aryl group containing 6 to 20 carbon atoms that optionally has a substituent, and a heteroaryl group containing 6 to 20 carbon atoms and optionally having a substituent, which contains one or more heterocyclic atoms selected from O, N and S,
Y represents a single bond or a divalent linking group, c and d each independently represent an integer of 0 to 10, and
p and q each independently represent an integer of 0 to 4.

[2] The thermoplastic resin according to the above [1], wherein the percentage of the constituent unit (A) is 5 to 95 mol%, and the percentage of the constituent unit (C) is 5 to 95 mol%, with respect to the total of the constituent units (A) and (C).
[3] The thermoplastic resin according to the above [1] or [2], wherein $R^3$ and $R^4$ in the general formula (1) each independently represent a methyl group, a phenyl group or a naphthyl group.
[4] The thermoplastic resin according to any one of the above [1] to [3], wherein $L^1$ in the general formula (1) each independently represents an alkylene group containing 1 to 5 carbon atoms that optionally has a substituent.
[5] The thermoplastic resin according to any one of the above [1] to [4], wherein the monomer represented by the general formula (1) has a structure represented by the following formula (1'):

[Formula 3]

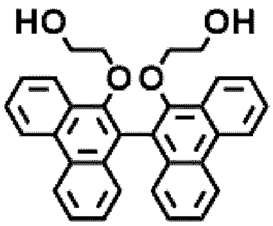

(1')

[6] The thermoplastic resin according to any one of the above [1] to [5], wherein Y in the general formula (3) represents a single bond, a fluorene group optionally having a substituent, or a divalent linking group having a structure represented by any of the following formulae (8) to (14):

[Formula 4]

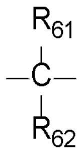

(8)

$-S-$

(9)

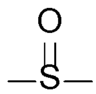

(10)

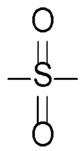

(11)

$-(CH_2)_r-$

(12)

$-O-$

(13)

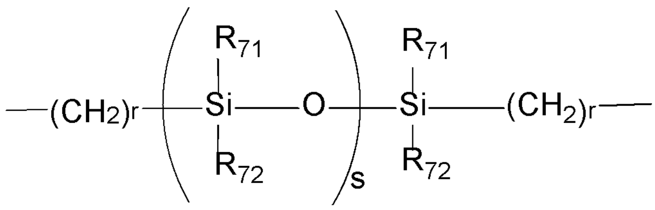

(14)

wherein, in the formulae (8) to (14),
$R_{61}$, $R_{62}$, $R_{71}$ and $R_{72}$ each independently represent a hydrogen atom, a halogen atom, an alkyl group containing 1 to 20 carbon atoms that optionally has a substituent, or an aryl group containing 6 to 30 carbon atoms that optionally has a substituent, or $R_{61}$ and $R_{62}$, or $R_{71}$ and $R_{72}$ bind to each other to form a C1-C20 carbon ring or heterocyclic ring optionally having a substituent, and
r and s each independently represent an integer of 0 to 5000.

[7] The thermoplastic resin according to any one of the above [1] to [6], wherein A' and B' in the general formula (3) each independently represent an alkylene group containing 2 or 3 carbon atoms that optionally has a substituent.
[8] The thermoplastic resin according to any one of the above [1] to [7], wherein the monomer represented by the general formula (3) has a structure represented by the following general formula (IV):

[Formula 5]

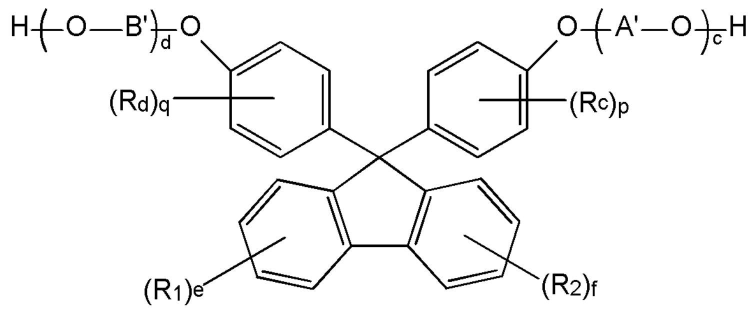

(IV)

wherein

A', B', $R_c$, $R_d$, c, d, p and q are as defined in the general formula (3);
$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and each of these optionally has a substituent; and
e and f each independently represent an integer of 0 to 4.

[9] The thermoplastic resin according to any one of the above [1] to [8], wherein the monomer represented by the general formula (3) is selected from the group consisting of the following:

[Formula 6]

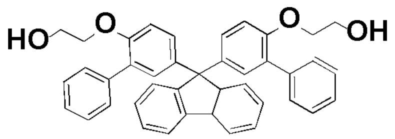

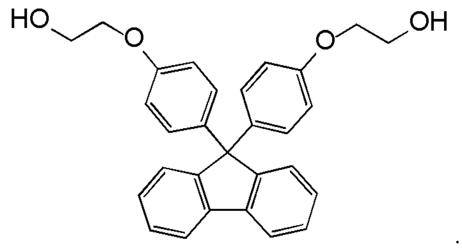

[10] The thermoplastic resin according to any one of the above [1] to [9], further comprising a constituent unit (B) derived from a monomer represented by the following general formula (2):

[Formula 7]

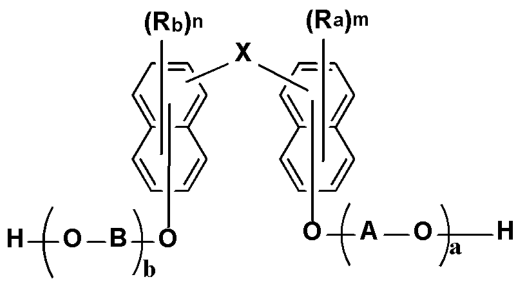
(2)

wherein

A and B each independently represent an alkylene group containing 1 to 5 carbon atoms that optionally has a substituent, a carbonyl group or a combination of these groups,
$R_a$ and $R_b$ are each independently selected from the group consisting of a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms, which contains one or more heterocyclic atoms selected from O, N and S, an aryloxy group containing 6 to 20 carbon atoms, and -C≡C-$R_h$, and each of these optionally has a substituent,
$R_h$ represents an aryl group containing 6 to 20 carbon atoms that optionally has a substituent, or a heteroaryl group containing 6 to 20 carbon atoms and optionally having a substituent, which contains one or more heterocyclic atoms selected from O, N and S,
X represents a single bond or a divalent linking group,
a and b each independently represent an integer of 0 to 10, and
m and n each independently represent an integer of 0 to 6.

[11] The thermoplastic resin according to the above [10], wherein the percentage of the constituent unit (A) is 10 to 35 mol %, the percentage of the constituent unit (B) is 20 to 50 mol %, and the percentage of the constituent unit (C) is 10 to 45 mol %, with respect to the total of the constituent units (A), (B) and (C).

[12] The thermoplastic resin according to the above [10] or [11], wherein X in the general formula (2) each independently represents a single bond or a fluorene group optionally having a substituent.

[13] The thermoplastic resin according to any one of the above [10] to [12], wherein the monomer represented by the general formula (2) has a structure represented by the following general formula (II) or (III):

[Formula 8]

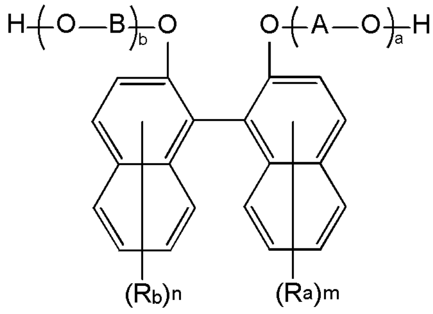

(II)

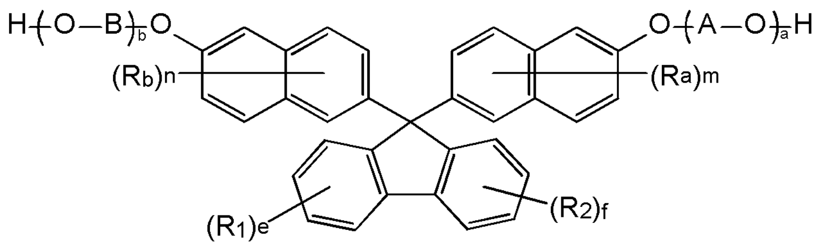

(III)

wherein

A, B, $R_a$, $R_b$, a, b, m and n are as defined in the general formula (2);
$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and each of these optionally has a substituent; and
e and f each independently represent an integer of 0 to 4.

[14] The thermoplastic resin according to any one of the above [10] to [13], wherein the monomer represented by the general formula (2) is selected from the group consisting of the following:

[Formula 9]

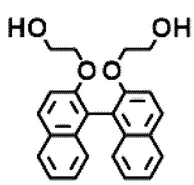

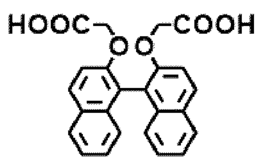

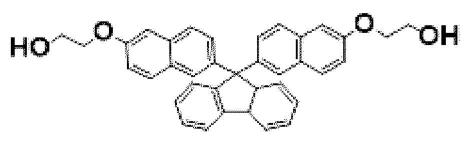

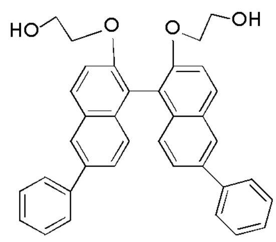

.

[15] The thermoplastic resin according to any one of the above [1] to [14], wherein the birefringence strength is greater than -0.5 and 0.5 or less.

[16] The thermoplastic resin according to any one of the above [1] to [15], wherein the percentage of molecules having a molecular weight (Mw) of less than 1000 in the thermoplastic resin is 1.9% or more, and

the percentage of the molecules having a molecular weight of less than 1000 (CLWC) is calculated according to the following formula:

[Expression 1]

$$\text{CLWC}(\%) = \frac{\text{Total of peak areas of compounds having molecular weight of less than 1000 in GPC analysis}}{\text{Total of all peak areas in GPC analysis}} \times 100$$

[16-1] The thermoplastic resin according to any one of the above [1] to [16], wherein the refractive index (nD) of the thermoplastic resin at 23°C at a wavelength of 589 nm is 1.635 to 1.695.

[16-2] The thermoplastic resin according to any one of the above [1] to [16-1], wherein the Abbe number (v) of the thermoplastic resin is 23 or less.

[17] The thermoplastic resin according to any one of the above [1] to [16-2], wherein the thermoplastic resin is selected from the group consisting of a polycarbonate resin, a polyester resin and a polyester carbonate resin.

[18] An optical member comprising the thermoplastic resin according to any one of the above [1] to [17].

[19] The optical member according to the above [18], which is an optical lens.

Advantageous Effects of Invention

According to the present invention, a thermoplastic resin that is useful as an optical material, and an optical member comprising the same, can be provided.

Description of Embodiments

Hereafter, the embodiments of the present invention will be described in detail.

According to one embodiment, the thermoplastic resin of the present invention comprises a constituent unit (A) derived from a monomer represented by the following general formula (1) and a constituent unit (C) derived from a monomer represented by the following general formula (3):

[Formula 10]

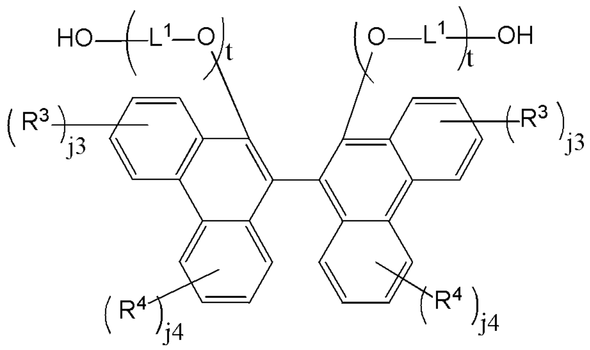

(1)

wherein

$L^1$ each independently represents a divalent linking group;

$R^3$ and $R^4$ each independently represent a halogen atom, or a substituent containing 1 to 20 carbon atoms that optionally contains an aromatic group;

j3 and j4 each independently represent an integer of 0 to 4; and

t represents an integer of 0 or 1; and

[Formula 11]

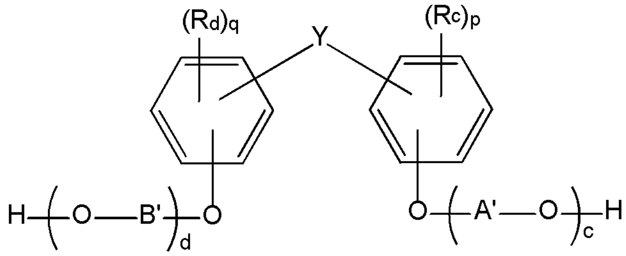

(3)

wherein

A' and B' each independently represent an alkylene group containing 1 to 5 carbon atoms that optionally has a substituent,

$R_c$ and $R_d$ are each independently selected from the group consisting of a halogen atom, an alkyl group containing 1 to 20 carbon atoms that optionally has a substituent, an alkoxyl group containing 1 to 20 carbon atoms that optionally has a substituent, a cycloalkyl group containing 5 to 20 carbon atoms that optionally has a substituent, a cycloalkoxyl group containing 5 to 20 carbon atoms that optionally has a substituent, an aryl group containing 6 to 20 carbon atoms that optionally has a substituent, and a heteroaryl group containing 6 to 20 carbon atoms and optionally having a substituent, which contains one or more heterocyclic atoms selected from O, N and S,

Y represents a single bond or a divalent linking group,

c and d each independently represent an integer of 0 to 10, and

p and q each independently represent an integer of 0 to 4.

The present inventors have found that the thermoplastic resin having the above-described structure has physical properties preferable for optical materials, such as a high refractive index, a small Abbe number, and a small absolute value of birefringence strength. In general, when the refractive index of an optical material is high, a lens element with the same refractive index can be realized on a surface with smaller curvature, thereby enabling a reduction in the amount of aberration generated on this surface. As a result, the number of lenses can be reduced, the eccentricity sensitivity of lenses can be reduced, and the thickness of a lens can be reduced, thereby enabling a reduction in the weight of the lens. In addition, by using a resin having a small absolute value of birefringence strength for optical lenses, the imaging performance of the final lens unit is improved, and a clear image can be obtained.

Moreover, the thermoplastic resin according to the embodiment of the present invention also has properties such as a small Abbe number and a preferable range of glass transition temperature (Tg). In general, in the optical system of cameras, etc., aberration correction is performed by combining multiple concave lenses and convex lenses. That is to say, the chromatic aberration created by the convex lens is synthetically cancelled by combining a concave lens with a chromatic aberration having a sign opposite to that of the convex lens. In this case, the concave lens is required to have high dispersion (i.e., low Abbe number). Furthermore, when it is assumed that the resin is molded by a method such as injection molding, the resin preferably has a glass transition temperature (Tg) that can ensure appropriate fluidity at the molding temperature.

Since the thermoplastic resin according to the embodiment has the aforementioned properties, it can be preferably used as a material for optical lenses, optical films, and other optical component.

Although the reason why the thermoplastic resin according to the embodiment has the properties as described above is not clear, one factor may be that the resin has a condensed ring structure. Since the condensed ring structure has a high planarity of a highly polarized structure, it is assumed that this contributes to the high refractive index of the resin, etc.

Hereafter, individual components, production methods, physical properties, intended uses, etc. of the thermoplastic resin according to the embodiment will be described in detail.

Constituent unit (A)

[1] According to one embodiment, the thermoplastic resin of the present invention comprises a constituent unit (A) and a constituent unit (C). The constituent unit (A) is a constituent unit derived from a monomer represented by the following general formula (1).

[Formula 12]

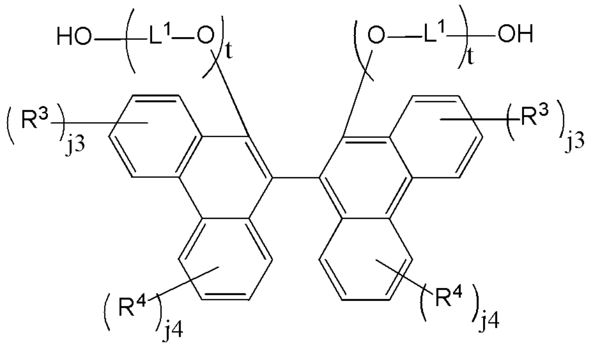

(1)

In the above formula (1), $L^1$ each independently represents a divalent linking group. $L^1$ is preferably an alkylene group containing 1 to 12 carbon atoms that optionally has a substituent, more preferably an alkylene group containing 1 to 5 carbon atoms, further preferably an alkylene group containing 2 or 3 carbon atoms, and particularly preferably an ethylene group. Examples of the substituent for the alkylene group represented by $L^1$ may include an alkyl group, a cycloalkyl group, an aryl group, an alkoxyl group, and a combination thereof. Specific examples of these groups may include a methyl group, an ethyl group, an n-propyl group, an isopropyl group, a phenyl group, a methoxy group, and an ethoxy group. By regulating the length of the linking group represented by $L^1$, the glass transition temperature (Tg) of the resin can be adjusted.

When $R^3$ and $R^4$ are present, $R^3$ and $R^4$ each independently represent a halogen atom, or a substituent containing 1 to 20 carbon atoms that optionally contains an aromatic group. Examples of the halogen atom may include a fluorine atom, a chlorine atom, and a bromine atom; and examples of the substituent containing 1 to 20 carbon atoms that optionally contains an aromatic group may include a methyl group, a phenyl group, a naphthyl group, a thienyl group, and a benzothienyl group. Examples of the naphthyl group may include a 1-naphthyl group and a 2-naphthyl group, and examples of the thienyl group may include a 2-thienyl group and a 3-thienyl group. Also, examples of the benzothienyl group may include a 2-benzo[b]thienyl group and a 3-benzo[b]thienyl group. These groups may further have a substituent, and examples of such a substituent may be, for example, those described as substituents for the alkylene group represented by $L^1$ above, but the examples are not limited thereto.

j3 and j4 each independently represent an integer of 0 to 4. j3 and j4 is preferably an integer of 0 to 2, more preferably 0 or 1, and particularly preferably 0.

t represents an integer of 0 or 1, and is preferably 1.

The monomer represented by the general formula (1) preferably has a structure represented by the following formula (1').

[Formula 13]

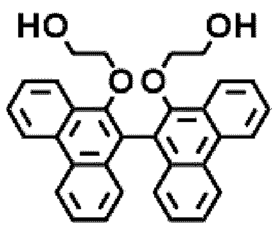

(1')

Constituent unit (C)

The constituent unit (C) is a constituent unit derived from the monomer represented by the following general formula (3).

[Formula 14]

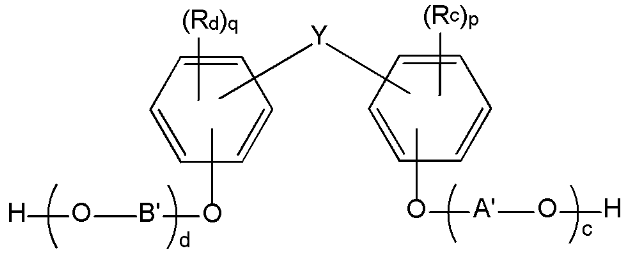

(3)

In the above formula (3), A' and B' each independently represent an alkylene group containing 1 to 5 carbon atoms that optionally has a substituent, preferably an alkylene group containing 2 or 3 carbon atoms, and more preferably ethylene group. Examples of the substituent may be, for example, those described as substituents for the alkylene group represented by $L^1$ above, but the examples are not limited thereto.

When $R_c$ and $R_d$ are present, $R_c$ and $R_d$ each independently represent a halogen atom, an alkyl group containing 1 to 20 carbon atoms that optionally has a substituent, an alkoxyl group containing 1 to 20 carbon atoms that optionally has a substituent, a cycloalkyl group containing 5 to 20 carbon atoms that optionally has a substituent, a cycloalkoxyl group containing 5 to 20 carbon atoms that optionally has a substituent, an aryl group containing 6 to 20 carbon atoms that optionally has a substituent, and a heteroaryl group containing 6 to 20 carbon atoms and optionally having a substituent, which contains one or more heterocyclic atoms selected from the group consisting of O, N and S.

$R_c$ and $R_d$ are preferably an aryl group containing 6 to 20 carbon atoms that optionally has a substituent, or a heteroaryl group containing 6 to 20 carbon atoms and optionally having a substituent, which contains one or more heterocyclic atoms selected from O, N and S. $R_c$ and $R_d$ are more preferably an aryl group containing 6 to 20 carbon atoms that optionally has a substituent, and particularly preferably an aryl group containing 6 to 12 carbon atoms that optionally has a substituent. Examples of the substituent may be, for example, those described as substituents for the alkylene group represented by $L^1$ above, but the examples are not limited thereto.

Y represents a single bond or a divalent linking group. Preferably, Y is a single bond, a fluorene group optionally having a substituent, or a divalent linking group having a structure represented by any of the following formulae (8) to (14). Y is more preferably, a single bond, a linking group having a structure represented by the following formula (8), or a fluorene group optionally having a substituent, and is particularly preferably a fluorene group optionally having a substituent.

[Formula 15]

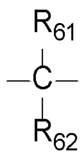

(8)

$-S-$

(9)

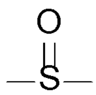

(10)

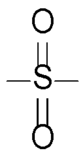

(11)

$-(CH_2)_r-$

(12)

$-O-$

(13)

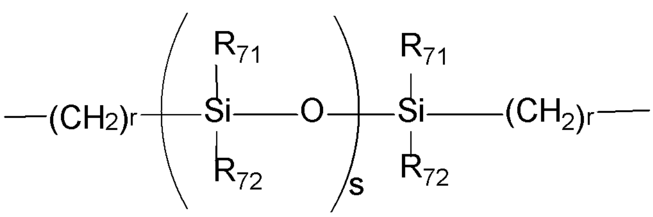

(14)

In the formulae (8) to (14), $R_{61}$, $R_{62}$, $R_{71}$ and $R_{72}$ each independently represent a hydrogen atom, a halogen atom, an alkyl group containing 1 to 20 carbon atoms that optionally has a substituent, or an aryl group containing 6 to 30 carbon atoms that optionally has a substituent, or $R_{61}$ and $R_{62}$, or $R_{71}$ and $R_{72}$ bind to one another to form a C1-C20 carbon ring or heterocyclic ring optionally having a substituent. Examples of the substituent may be, for example, those described as substituents for the alkylene group represented by $L^1$ above, but the examples are not limited thereto.

r and s each independently represent an integer of 0 to 5000. r is preferably an integer of 1 to 20, and more preferably an integer of 1 to 9. In addition, s is preferably an integer of 1 to 5000, and more preferably an integer of 1 to 500.

In the above general formula (3), p and q each independently represent an integer of 0 to 4, and is preferably 0 or 1. In addition, c and d each independently represent an integer of 0 to 10, preferably an integer of 0 to 5, more preferably an integer of 0 to 2, and particularly preferably 0 or 1.

The monomer represented by the above general formula (3) preferably has a structure represented by the following general formula (IV).

[Formula 16]

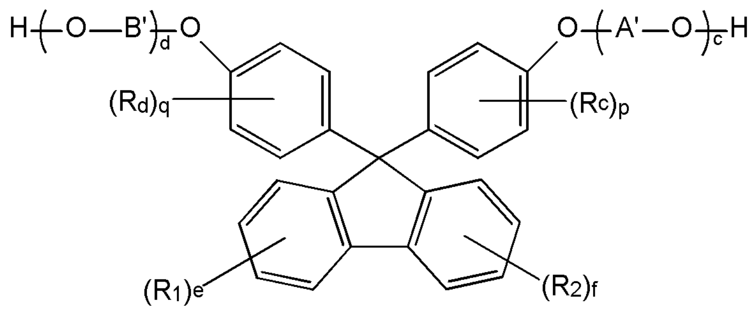

(IV)

In the above formula (IV), A', B', $R_c$, $R_d$, c, d, p and q are as defined above in the general formula (3), and preferred examples thereof are also the same as those in the general formula (3).

$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and each of these groups optionally has a substituent. $R_1$ and $R_2$ are preferably selected from a methyl group, an ethyl group, a propyl group, an isopropyl group, a butyl group, a t-butyl group, a cyclopentyl group, a cyclohexyl group, a phenyl group, a tolyl group, a 2-methylphenyl group, a xylyl group, a 1-naphthyl group, a 2-naphthyl group, a benzyl group, a phenethyl group, a fluorine atom, a chlorine atom, and a bromine atom, and are more preferably selected from a methyl group, a phenyl group, a 1-naphthyl group, and a 2-naphthyl group. Examples of the substituent may be, for example, those described as substituents for the alkylene group represented by $L^1$ in the above explanation of the general formula (1), but the examples are not limited thereto.

e and f each independently represent an integer of 0 to 4. e and f are preferably 0 to 2, and more preferably are 0 or 1.

Specific examples of the constituent unit (C) may include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (naphthalen-2-ylethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[(1,1'-biphenyl)-4,4'-diylbis(oxy)]bisethanol), S-BOC (4,4'-(1-methylethylidene)bis(2-methylphenol)), TrisP-HAP (4,4',4"-ethylidenetrisphenol). etc. Among these, the constituent unit (C) is preferably that derived from the following BPEF or BPPEF.

[Formula 17]

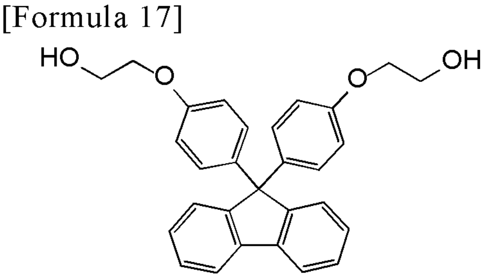

(BPEF)

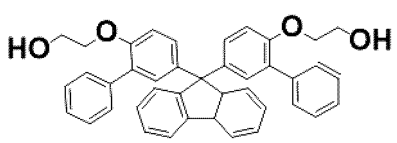

(BPPEF)

Thermoplastic resin

The thermoplastic resin according to the embodiment comprises the constituent unit (A) derived from the monomer represented by the general formula (1) and the constituent unit (C) derived from the monomer represented by the general formula (3), which are mentioned above. It is preferable that, with respect to the total of the constituent units (A) and (C), the percentage of the constituent unit (A) is 5 to 95 mol% and the percentage of the constituent unit (C) is 5 to 95 mol%. The percentage of the constituent unit (A) with respect to the total of the constituent units (A) and (C) in the thermoplastic resin is more preferably 10 to 70 mol %, further preferably 20 to 60 mol %, and particularly preferably 30 to 50 mol %. The percentage of the constituent unit (C) with respect to the total of the constituent units (A) and (C) in the thermoplastic resin is more preferably 30 to 90 mol %, further preferably 40 to 80 mol %, and particularly preferably 50 to 70 mol %. By setting the percentage of the constituent units (A) and (C) in the thermoplastic resin to be in such a range, a resin having properties such as high refractive index and high Tg (high heat resistance) can be obtained.

The type of the resin is not particularly limited, and examples of the resin may include a polyester resin, a polycarbonate resin, a polyester carbonate resin, an epoxy resin, a polyurethane resin, a polyacrylic acid ester resin, and a polymethacrylic acid ester resin. Among these, the present resin is preferably a polyester resin, a polycarbonate resin or a polyester carbonate resin. In addition, the thermoplastic resin according to the embodiment may be any structure of random, block and alternating copolymers.

Constituent unit (B)

The thermoplastic resin according to the embodiment may further comprise a constituent unit (B) derived from a monomer represented by the following general formula (2).

[Formula 18]

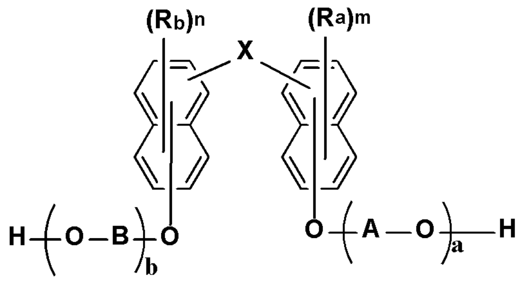

(2)

In the above formula (2), A and B each independently represent an alkylene group containing 1 to 5 carbon atoms that optionally has a substituent, a carbonyl group, or a combination of these groups. A and B are preferably an alkylene group containing 1 to 3 carbon atoms, a carbonyl group, or a combination of these groups, and more preferably an alkylene group containing 1 or 2 carbon atoms, a carbonyl group, or a combination of these groups.

$R_a$ and $R_b$ are each independently selected from the group consisting of a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms, which contains one or more heterocyclic atoms selected from O, N and S, an aryloxy group containing 6 to 20 carbon atoms, and $-C{\equiv}C-R_h$, and each of these optionally has a substituent. Herein, $R_h$ represents an aryl group containing 6 to 20 carbon atoms that optionally has a substituent, or a heteroaryl group containing 6 to 20 carbon atoms and optionally having a substituent, which contains one or more heterocyclic atoms selected from O, N and S. Examples of the substituent may be, for example, those described as substituents for the alkylene group represented by $L^1$ in the above explanation of the general formula (1), but the examples are not limited thereto.

$R_a$ and $R_b$ are preferably an aryl group containing 6 to 20 carbon atoms that optionally has a substituent, or a heteroaryl group containing 6 to 20 carbon atoms and optionally having a substituent that contains one or more heterocyclic atoms selected from O, N and S; are more preferably an aryl group containing 6 to 20 carbon atoms that optionally has a substituent; and are further preferably an aryl group containing 6 to 12 carbon atoms that optionally has a substituent.

X represents a single bond or a divalent linking group, and preferably a single bond or a fluorene group optionally having a substituent. The total number of carbon atoms of the fluorene group optionally having a substituent is preferably 12 to 20. Examples of the substituent may be, for example, those described as substituents for the alkylene group

represented by $L^1$ in the above explanation of the general formula (1), but the examples are not limited thereto.

a and b each independently represent an integer of 0 to 10. a and b each independently represent preferably an integer of 0 to 5, more preferably an integer of 1 to 3, and further preferably 1 or 2.

m and n each independently represent an integer of 0 to 6. m and n each independently represent preferably an integer of 0 to 3, and more preferably 0 or 1.

The monomer represented by the above general formula (2) preferably has a structure represented by the following general formula (II) or (III).

[Formula 19]

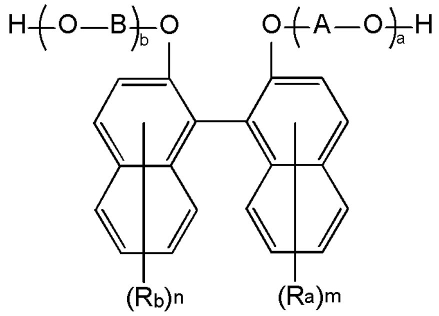

(II)

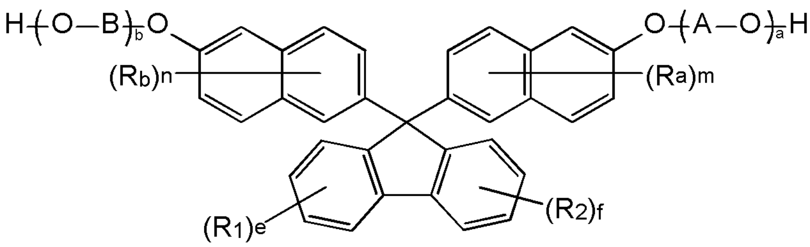

(III)

In the above formulae (II) and (III), A, B, $R_a$, $R_b$, a, b, m and n are as defined above.

$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and each of these groups optionally has a substituent. $R_1$ and $R_2$ are preferably selected from a methyl group, an ethyl group, a propyl group, an isopropyl group, a butyl group, a t-butyl group, a cyclopentyl group, a cyclohexyl group, a phenyl group, a tolyl group, a 2-methylphenyl group, a xylyl group, a 1-naphthyl group, a 2-naphthyl group, a benzyl group, a phenethyl group, a fluorine atom, a chlorine atom and a bromine atom, and are more preferably selected from a methyl group, a phenyl group, a 1-naphthyl group, and a 2-naphthyl group. Examples of the substituent may be, for example, those described as substituents for the alkylene group represented by $L^1$ in the above explanation of the general formula (1), but the examples are not limited thereto.

e and f each independently represent an integer of 0 to 4. e and f each independently represent preferably an integer of 0 to 2, and more preferably 0 or 1.

The monomer represented by the above general formula (II) or (III) preferably has the following structure.

[Formula 20]

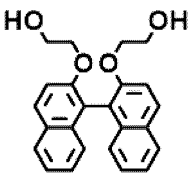

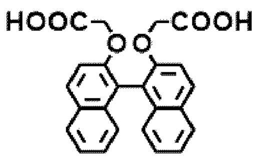

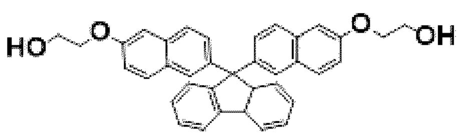

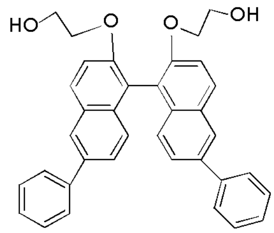

When the thermoplastic resin comprises the constituent unit (B), it is preferable that, with respect to the total of the constituent units (A), (B) and (C) in the thermoplastic resin, the percentage of the constituent unit (A) is 10 to 35 mol %, the percentage of the constituent unit (B) is 20 to 50 mol %, and the percentage of the constituent unit (C) is 10 to 45 mol %. The percentage of the constituent unit (A) with respect to the total of the constituent units (A), (B) and (C) in the thermoplastic resin is more preferably 15 to 35 mol %, and further preferably 20 to 35 mol %. When the constituent unit (B) is a diol compound, the percentage of the constituent unit (B) with respect to the total of the constituent units (A), (B) and (C) in the thermoplastic resin is preferably 20 to 40 mol %, and more preferably 20 to 30 mol %. When the constituent unit (B) is a dicarboxylic acid compound, the percentage of the constituent unit (B) with respect to the total of the constituent units (A), (B) and (C) in the thermoplastic resin is preferably 30 to 50 mol %, and more preferably 40 to 50 mol %. The percentage of the constituent unit (C) with respect to the total of the constituent units (A), (B) and (C) in the thermoplastic resin is more preferably 20 to 45 mol %, and further preferably 30 to 45 mol %. By setting the percentage of the constituent units (A), (B) and (C) in the thermoplastic resin to be in such a range, a resin having properties such as high refractive index, high Tg (high heat resistance) and small absolute value of birefringence strength (close to 0) can be obtained.

The thermoplastic resin according to the embodiment may comprise constituent units other than the constituent units (A) to (C) represented by the above formulae. Examples of such constituent units may include constituent units derived from aliphatic dihydroxy compounds and constituent units derived from aromatic dihydroxy compounds, which are generally used as constituent units for polycarbonate resins or polyester carbonate resins.

Examples of the aliphatic dihydroxy compound may include various compounds, and particular examples thereof may include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Examples of the aromatic dihydroxy compound may include various compounds, and particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and bisphenoxyethanolfluorene.

It is also preferable that the thermoplastic resin according to the embodiment further comprises a constituent unit derived from at least one monomer selected from the following monomer group:

[Formula 21]

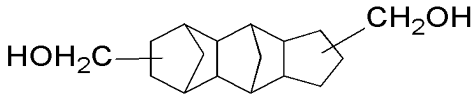
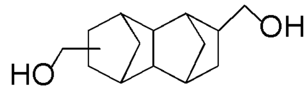

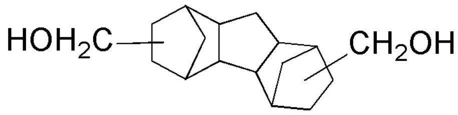
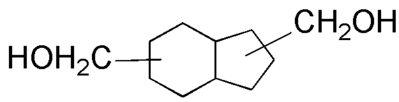

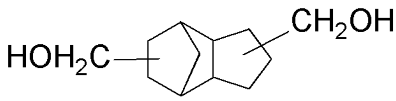
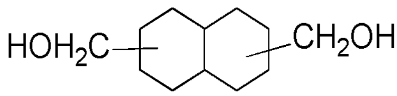

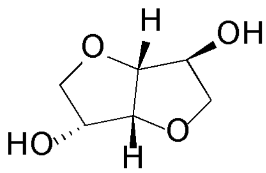
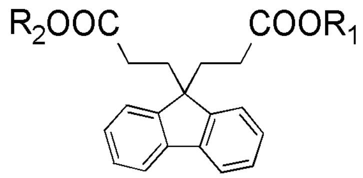

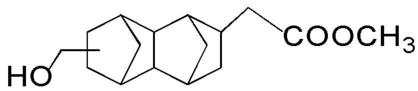
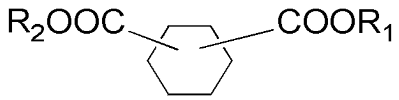

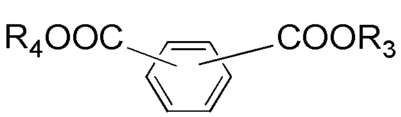
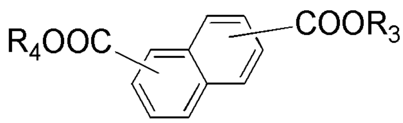

wherein, in the above formulae, $R_1$ and $R_2$ each independently represent a hydrogen atom, a methyl group or an ethyl group, $R_3$ and $R_4$ each independently represent a hydrogen atom, a methyl group, an ethyl group or alkylene glycol containing 2 to 5 carbon atoms.

There is a case where the thermoplastic resin according to the embodiment may comprise, as impurities, an alcoholic compound that may be generated as a by-product upon the production thereof, such as a phenolic compound, or a diol component or a carbonic acid diester that has not reacted and remains.

The alcoholic compound such as the phenolic compound, and the carbonic acid diester, which are both impurities, may cause a reduction in the strength when the resin is processed into a molded body, or generation of odors. Accordingly, the smaller the contents of these compounds, the better.

The content of the remaining phenolic compound is preferably 3000 ppm by mass or less, more preferably 1000 ppm by mass or less, particularly preferably 300 ppm by mass or less, with respect to 100% by mass of the thermoplastic resin.

The content of the remaining diol component is preferably 1000 ppm by mass or less, more preferably 100 ppm by mass or less, and particularly preferably 10 ppm by mass or less, with respect to 100% by mass of the thermoplastic resin.

The content of the remaining carbonic acid diester is preferably 1000 ppm by mass or less, more preferably 100 ppm by mass or less, and particularly preferably 10 ppm by mass or less, with respect to 100% by mass of the thermoplastic resin.

In particular, it is preferable that the contents of compounds such as phenol and t-butyl phenol are small, and it is preferable that the contents of these compounds are within the above-described range.

The content of a phenolic compound remaining in the thermoplastic resin can be measured, for example, by a method of analyzing a phenolic compound extracted from the thermoplastic resin, using gas chromatography.

The content of an alcoholic compound remaining in the thermoplastic resin can also be measured, for example, by a method of analyzing an alcoholic compound extracted from the thermoplastic resin, using gas chromatography.

The contents of a diol component and a carbonic acid diester remaining in the thermoplastic resin can also be

measured by a method of extracting these compounds from the thermoplastic resin, and then analyzing them using gas chromatography.

The contents of a by-product alcoholic compound such as a phenolic compound, a diol component, and a carbonic acid diester may be reduced to such an extent that these compounds are undetectable. However, from the viewpoint of productivity, the thermoplastic resin may comprise very small amounts of these compounds in a range in which the compounds do not impair the properties of the resin. In addition, by allowing the resin to contain very small amounts of these compounds, the plasticity of the resin can be improved upon the melting of the resin.

The content of the remaining phenolic compound, diol component or carbonic acid diester may each be, for example, 0.01 ppm by mass or more, 0.1 ppm by mass or more, or 1 ppm by mass or more, with respect to 100% by mass of the thermoplastic resin.

The content of the remaining alcoholic compound may be, for example, 0.01 ppm by mass or more, 0.1 ppm by mass or more, or 1 ppm by mass or more, with respect to 100% by mass of the thermoplastic resin.

Besides, the contents of the by-product alcoholic compound such as a phenolic compound, the diol component and the carbonic acid diester in the thermoplastic resin can be regulated to be within the above-described ranges by appropriately adjusting conditions for polycondensation or the setting of apparatuses. Otherwise, the contents of these compounds can also be regulated by determining conditions for an extrusion step after completion of the polycondensation.

For example, the amount of the remaining by-product alcoholic compound such as a phenolic compound depends on the type of carbonic acid diester used in the polymerization of the thermoplastic resin, the temperature applied to the polymerization reaction, the polymerization pressure, etc. By adjusting these conditions, the amount of the remaining by-product alcoholic compound such as a phenolic compound can be reduced.

For example, when the thermoplastic resin is produced using dialkyl carbonate such as diethyl carbonate, the molecular weight is hardly increased, and a low-molecular-weight resin is thereby obtained, so that the content of an alcoholic compound generated as a by-product tends to be increased. Such alkyl alcohol has high volatility, and thus, if it remains in the resin, the moldability of the resin tends to be deteriorated. In addition, when the amount of the remaining by-product alcoholic compound such as a phenolic compound is large, it is likely that problems regarding odor occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained resin is preferably 3000 ppm by mass or less, with respect to the amount of the thermoplastic resin (100% by mass). The content of the remaining alcoholic compound is preferably 3000 ppm by mass or less, more preferably 1000 ppm by mass or less, and particularly preferably 300 ppm by mass or less, with respect to 100% by mass of the thermoplastic resin.

## Method for producing thermoplastic resin

As mentioned above, the type of the thermoplastic resin according to the embodiment is not particularly limited, and all resins can be produced using an ordinary method used in the present technical field. Hereafter, the method for producing the thermoplastic resin will be described, taking a polycarbonate resin, a polyester carbonate resin and a polyester resin as examples, but the method for producing the thermoplastic resin is not limited thereto.

### < Method for producing polycarbonate resin >

The polycarbonate resin can be produced by using monomer compounds constituting the aforementioned constituent units (A), (B) and (C) (provided that the constituent unit (B) is an optional component, and the same applies to the explanations that follow) as dihydroxy components and then allowing such hydroxy compounds to react with carbonate precursor substances such as carbonic acid diester. Specifically, the monomer compounds constituting the constituent units (A), (B) and (C) are allowed to react with carbonate precursor substances such as carbonic acid diester according to a melt polycondensation method, in the presence of a basic compound catalyst or a transesterification catalyst, or a mixed catalyst consisting of them, or in the absence of a catalyst.

Other aromatic dihydroxy compounds may be further used, and examples thereof may include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, bisphenol Z.

Examples of the carbonic acid diester may include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among these, diphenyl carbonate is particularly preferable. Diphenyl carbonate is used preferably at a ratio of 0.97 to 1.20 moles, and more preferably at a ratio of 0.98 to 1.10 moles, with respect to a total of 1 mole of dihydroxy compounds used.

A basic compound catalyst can be used as a transesterification catalyst, and particular examples of the basic compound catalyst may include an alkali metal compound, an alkaline-earth metal compound, and a nitrogen-containing

compound.

Examples of the alkali metal compound may include the organic acid salts, inorganic salts, oxides, hydroxides, hydrides or alkoxides of alkali metals. Specific examples of the alkali metal compound used herein may include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate, sodium benzoate, potassium benzoate, cesium benzoate, lithium benzoate, disodium hydrogen phosphate, dipotassium hydrogen phosphate, dilithium hydrogen phosphate, disodium phenyl phosphate, the disodium salts, dipotassium salts, dicesium salts or dilithium salts of bisphenol A, and the sodium salts, potassium salts, cesium salts or lithium salts of phenol.

Examples of the alkaline-earth metal compound may include the organic acid salts, inorganic salts, oxides, hydroxides, hydrides and alkoxides of the alkaline-earth metal compounds. Specific examples of the alkaline-earth metal compound used herein may include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

Examples of the nitrogen-containing compound may include quaternary ammonium hydroxides and salts thereof, and amines. Specific examples of the nitrogen-containing compound used herein may include: quaternary ammonium hydroxides having an alkyl group, an aryl group, etc., such as tetramethylammonium hydroxide, tetraethylammonium hydroxide, tetrapropylammonium hydroxide, tetrabutylammonium hydroxide, and trimethylbenzylammonium hydroxide; tertiary amines such as triethylamine, dimethylbenzylamine, and triphenylamine; secondary amines such as diethylamine and dibutylamine; primary amines such as propylamine and butylamine; imidazoles such as 2-methylimidazole, 2-phenylimidazole, and benzoimidazole; and bases or basic salts, such as ammonia, tetramethylammonium borohydride, tetrabutylammonium borohydride, tetrabutylammonium tetraphenylborate, and tetraphenylammonium tetraphenylborate.

As transesterification catalysts, salts of zinc, tin, zirconium, lead, etc. are also preferably used, and these salts can be used alone or in combination with other catalysts. Specific examples of the transesterification catalyst used herein may include zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, and lead(IV) acetate.

Such a catalyst is used at a ratio of $1 \times 10^{-9}$ to $1 \times 10^{-3}$ moles, and preferably at a ratio of $1 \times 10^{-7}$ to $1 \times 10^{-4}$ moles, with respect to a total of 1 mole of dihydroxy compounds used. Or, such a catalyst is used such that the metal components in the catalyst can be preferably 0.001 ppm to 1000 ppm, more preferably 0.01 ppm to 100 ppm, and particularly preferably 0.1 ppm to 100 ppm, with respect to the amount of a theoretically generated resin.

In the melt polycondensation method, the above-described raw materials and catalysts are used, and melt polycondensation is carried out under heating, further, under ordinary pressure or reduced pressure, while removing by-products according a transesterification reaction.

In the melt polycondensation in the present composition system, the dihydroxy compound and carbonic acid diester are melted in a reaction vessel, and thereafter, the reaction is desirably carried out in a state in which monohydroxy compounds generated as by-products are retained. In order to allow such monohydroxy compounds to retain, pressure can be controlled, for example, by closing the reaction apparatus, or by reducing or increasing the pressure in the reaction apparatus. The reaction time necessary for this step is 20 minutes or more and 240 minutes or less, preferably 40 minutes or more and 180 minutes or less, and particularly preferably 60 minutes or more and 150 minutes or less. During this step, if the monohydroxy compounds generated as by-products are distilled away immediately after the generation thereof, the finally obtained polycarbonate resin has only a low content of polymer. However, if the monohydroxy compounds generated as by-products are retained in the reaction vessel for a certain period of time, the finally obtained polycarbonate resin has a high content of polymer.

The melt polycondensation reaction may be carried out either in a continuous system or in a batch system. The reaction apparatus used to perform the above-described reaction may be a vertical reaction apparatus equipped with an anchor-type impeller, a max-blend impeller, a helical ribbon-type impeller, etc., or a horizontal reaction apparatus equipped with paddle blades, lattice blades, glasses blades, etc., or further, an extruder-type reaction apparatus equipped with a screw, etc. Moreover, a reaction apparatus prepared by appropriately combining the aforementioned reaction apparatuses with one another is preferably used, while taking into consideration the viscosity of a polymer.

In the aforementioned method for producing the polycarbonate resin, after completion of the polymerization reaction, in order to maintain heat stability and hydrolytic stability, the catalyst may be removed or deactivated. For example, the catalyst can be deactivated by addition of a known acidic substance. Specific examples of the acidic substances that are preferably used herein may include: esters such as butyl benzoate; aromatic sulfonic acids such as p-toluenesulfonic acid; aromatic sulfonic acid esters, such as butyl p-toluenesulfonate and hexyl p-toluenesulfonate; phosphoric acids, such as phosphorous acid, phosphoric acid, and phosphonic acid; phosphorous acid esters, such as triphenyl phosphite, monophenyl phosphite, diphenyl phosphite, diethyl phosphite, di-n-propyl phosphite, di-n-butyl phosphite, di-n-hexyl phosphite, dioctyl phosphite, and monooctyl phosphite; phosphoric acid esters, such as triphenyl phosphate, diphenyl phosphate, monophenyl phosphate, dibutyl phosphate, dioctyl phosphate, and monooctyl phosphate; phosphonic acids, such as diphenyl phosphonate, dioctyl phosphonate, and dibutyl phosphonate; phosphonic acid esters such as diethyl phenyl phosphonate; phosphines, such as triphenylphosphine and bis(diphenylphosphino)ethane; boric acids, such as boric acid and phenyl borate; aromatic sulfonates, such as tetrabutylphosphonium dodecylbenzenesulfonate; organic halides, such as chloride stearate, benzoyl chloride, and p-toluenesulfonyl chloride; alkyl sulfates such as dimethyl sulfonate; and organic halogenates such as benzyl chloride. Such a deactivating agent may be used in an amount of 0.01 to 50 times moles, and preferably 0.3 to 20 times moles, with respect to the amount of the catalyst. By using the deactivating agent in such an amount, sufficient deactivating effects can be obtained, and also, a resin having excellent heat resistance can be produced.

After the catalyst has been deactivated, a step of removing a low-boiling-point compound from the polymer by devolatilization at a pressure of 0.1 to 1 mmHg and at a temperature of 200°C to 350°C may be established. For this step, a horizontal apparatus equipped with stirring blades having excellent surface renewal ability, such as paddle blades, lattice blades or glasses blades, or a thin film evaporator is preferably used.

< Method for producing polyester carbonate resin >

The polyester carbonate resin can be produced according to a melt polycondensation method, for example, using, as raw materials, a dicarboxylic acid, a dihydroxy compound, and a carboxylic acid diester. The monomer compounds constituting the aforementioned constituent units (A), (B) and (C) can be used as dicarboxylic acids or dihydroxy compounds. As such dihydroxy compounds, aliphatic dihydroxy compounds or aromatic dihydroxy compound, which are described above, may also be used. As carbonic acid diesters, the same compounds as those used in production of the polycarbonate resin can be used.

Dicarboxylic acid is not particularly limited, and examples of the dicarboxylic acid that is preferably used herein may include: aromatic dicarboxylic acids, such as naphthalenedicarboxylic acid, terephthalic acid, isophthalic acid, phthalic acid, 2-methylterephthalic acid, biphenyldicarboxylic acid, and tetralindicarboxylic acid; aliphatic dicarboxylic acids, such as oxalic acid, malonic acid, succinic acid, maleic acid, fumaric acid, glutaric acid, adipic acid, pimelic acid, suberic acid, azelaic acid, sebacic acid, decanedicarboxylic acid, dodecanedicarboxylic acid, cyclohexandicarboxylic acid, decalindicarboxylic acid, norbornandicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane, and dimer acid; and derivatives thereof. Examples of the derivative of dicarboxylic acid may include an ester, an acid anhydride, and an acid halide.

The additive amount of each compound can be determined, assuming that the dihydroxy compound and the dicarboxylic acid react with each other in equal moles and the remainder reacts with the carbonic acid diester. The carbonic acid diester is used preferably at a ratio of 0.60 to 1.50 moles, more preferably 0.80 to 1.40 moles, further preferably 1.00 to 1.30 moles, still further preferably 1.00 to 1.25 moles, and particularly preferably 1.00 to 1.20 moles, with respect to 1 mole of difference between the diol component and the dicarboxylic acid component. By adjusting this molar ratio, the molecular weight of the polyester carbonate resin can be controlled.

The catalyst, the reaction device, etc. are the same as those used in the aforementioned method for producing a polycarbonate resin. When a polyester carbonate resin is produced according to melt polycondensation, the reaction is carried out at a temperature of 120°C to 260°C, preferably 180°C to 260°C, and for 0.1 to 5 hours, preferably for 0.5 to 3 hours. Subsequently, the reaction temperature is increased, while the pressure in the reaction system is reduced, and the reaction between the diol compound and the carbonic acid diester is carried out. Finally, the polycondensation reaction is carried out at a temperature of 200°C to 350°C under a reduced pressure of 1 mmHg or less for 0.05 to 2 hours.

The removal or deactivation of the catalyst after the reaction is the same as for the polycarbonate resin.

< Method for producing polyester resin >

The polyester resin can be produced according to a conventionally known polyester production method, using a dicarboxylic acid and a dihydroxy compound. Examples of the method for producing polyester resin may include melt polymerization methods such as a transesterification method and a direct esterification method, and solution polymerization methods. The same dicarboxylic acids and dihydroxy compounds as those described in the above-described methods for producing a polycarbonate resin and a polyester carbonate resin can be used.

Upon production of the polyester resin, a transesterification catalyst, an esterification catalyst, a polycondensation catalyst, etc., which are used in production of an ordinary polyester resin, can be used. These catalysts are not

particularly limited, and examples thereof may include compounds of metals such as zinc, lead, cerium, cadmium, manganese, cobalt, lithium, sodium, potassium, calcium, nickel, magnesium, vanadium, aluminum, titanium, antimony, germanium, and tin (e.g., fatty acid salts, carbonates, phosphates, hydroxides, chlorides, oxides, and alkoxides), and metallic magnesium. These can be used alone or in combination of two or more types. Among the aforementioned compounds, compounds of manganese, cobalt, zinc, titanium, calcium, antimony, germanium, and tin are preferable as catalysts, and compounds of manganese, titanium, antimony, germanium, and tin are more preferable as catalysts. The amount of these catalysts used is not particularly limited, and the amount of the metal component is preferably 1 to 1000 ppm, more preferably 3 to 750 ppm, and further preferably 5 to 500 ppm, with respect to the amount of the raw materials for the polyester resin.

The reaction temperature in the polymerization reaction depends on the type of a catalyst and the amount thereof used. The reaction temperature is generally in the range of 150°C to 300°C, and when considering the reaction speed and coloration of the resin, the reaction temperature is preferably 180°C to 280°C. The pressure inside the reaction layer is preferably adjusted from atmospheric pressure to 1 kPa or less, and finally, it is more preferably adjusted to 0.5 kPa or less.

When a polymerization reaction is carried out, a phosphorus compound may be added. Examples of the phosphorus compound may include, but are not limited to, phosphoric acid, phosphorous acid, phosphoric acid ester, and phosphorous acid ester. Examples of the phosphoric acid ester may include, but are not limited to, methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate, and triphenyl phosphate. Examples of the phosphorous acid ester may include, but not limited to, methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite, and triphenyl phosphite. These can be used alone or in combination of two or more types. The concentration of phosphorus atoms in the polyester resin of the present invention is preferably 1 to 500 ppm, more preferably 5 to 400 ppm, and further preferably 10 to 200 ppm.

In the case of either resin, the content of a foreign matter in the thermoplastic resin is desired to be as small as possible, and thus, filtration of melted raw materials and filtration of a catalyst solution are preferably carried out. The thickness of a filtration filter mesh is preferably 5 μm or less, and more preferably 1 μm or less. Moreover, filtration of the generated resin through a polymer filter is preferably carried out. The thickness of the polymer filter mesh is preferably 100 μm or less, and more preferably 30 μm or less. Furthermore, a step of collecting resin pellets must be naturally performed under a low-dust environment, and the class is preferably 6 or less, and more preferably 5 or less.

Moreover, upon production of the resin, etherification inhibitors, various types of stabilizers such as a heat stabilizer and a light stabilizer, polymerization adjusters, etc., can be used.

Physical properties of thermoplastic resin

The polystyrene-converted weight average molecular weight (Mw) of the thermoplastic resin according to the embodiment is preferably 20,000 to 200,000. The polystyrene-converted weight average molecular weight (Mw) is more preferably 20,000 to 120,000, further preferably 20,000 to 55,000, particularly preferably 25,000 to 45,000, and further particularly preferably 10,000 to 40,000. The polystyrene-converted weight average molecular weight (Mw) can be measured by the method described in the after-mentioned Examples.

By setting the Mw to 20,000 or more, sufficient strength can be obtained when the resin is molded. By setting the Mw to 200,000 or less, the appropriate melt viscosity is obtained during production of the resin, and the resin can be removed without any problems after the production. In addition, fluidity suitable for molding the resin is obtained in the molten state.

The refractive index (nD) of the thermoplastic resin according to the embodiment at 23°C at a wavelength of 589 nm is preferably 1.635 to 1.695, more preferably 1.640 to 1.690, further preferably 1.645 to 1.685, and particularly preferably 1.650 to 1.680. The thermoplastic resin according to the embodiment has a high refractive index (nD) and is suitable for optical materials. The refractive index can be measured by the method described in the after-mentioned Examples.

The Abbe number (v) of the thermoplastic resin according to the embodiment is preferably 23 or less, more preferably 21 or less, further preferably 20 or less, and particularly preferably 19 or less. The Abbe number can be measured by the method described in the after-mentioned Examples.

The birefringence strength of the thermoplastic resin according to the embodiment is preferably -0.8 to +0.5, more preferably greater than -0.5 and 0.5 or less, further preferably -0.4 to +0.4, and particularly preferably -0.3 to +0.3. For example, the absolute value of birefringence strength is preferably less than 0.5, 0.4 or less, 0.3 or less, 0.2 or less, or 0.1 or less. The birefringence strength can be measured by the method described in the after-mentioned Examples.

The glass transition temperature (Tg) of the thermoplastic resin according to the embodiment is preferably 90°C to 180°C, more preferably 95°C to 175°C, further preferably 100°C to 170°C, still further preferably 140°C to 170°C, and particularly preferably 150°C to 170°C. The glass transition temperature is in this range, so that molding such as injection

molding can be carried out successfully. In addition, since the melting temperature of the resin is not very high, decomposition and discoloration of the resin are unlikely to occur. Furthermore, since the difference between the mold temperature and the glass transition temperature of the resin is within an appropriate range for general-purpose mold temperature controllers, the present thermoplastic resin can be used for applications that require strict surface accuracy. From the viewpoint of molding fluidity and molding heat resistance, the lower limit value of Tg is preferably 130°C, and more preferably 135°C. The upper limit value of Tg is preferably 165°C, and more preferably 160°C.

The thermoplastic resin according to the embodiment comprises low-molecular-weight compounds having a molecular weight of less than 1000 in an amount of preferably 1.9% or more, more preferably 2% or more, further preferably 2.5% or more, and particularly preferably 3% or more, for example, 1.9% to 9%, 2% to 7%, 2.5% to 5%, or 2.9% to 5%. When a thermoplastic resin comprising low-molecular-weight compounds having a molecular weight of less than 1000 in the above-described amount range is molded, a molded body with excellent mechanical strength can be obtained. In addition, precipitation of a low-molecular-weight compounds called "bleed-out" does not occur during molding such as injection molding, or only small amounts of the low-molecular-weight compounds are easily generated. Furthermore, since the plasticity of the resin increases during molding, the thermoplastic resin comprising such low-molecular-weight compounds is also advantageous in that the molding speed can be improved and in that the energy cost can be reduced during molding.

Herein, the percentage of the low-molecular-weight compounds in the thermoplastic resin is a value calculated using GPC analysis, and it is the percentage of a total of peak areas of compounds having a molecular weight of less than 1000 with respect to a total of all peak areas, when the thermoplastic resin is subjected to GPC analysis. That is to say, the percentage (CLWC) of the low-molecular-weight compounds in the thermoplastic resin is represented by the following formula:

[Expression 2]

$$\mathrm{CLWC}\ (\%) = \frac{\text{Total of peak areas of compounds having molecular weight of less than 1000 in GPC analysis}}{\text{Total of all peak areas in GPC analysis}} \times 100$$

The GPC analysis can be carried out by the method described in the after-mentioned Examples.

Optical molded body

Using the thermoplastic resin according to the present embodiment, an optical molded body can be produced. The optical molded body is molded by any given method, such as, for example, an injection molding method, a compression molding method, an extrusion molding method, or a solution casting method. Since the thermoplastic resin according to the present embodiment is excellent in moldability and heat resistance, it can be particularly advantageously used in optical lenses that require injection molding. Upon the molding, the thermoplastic resin according to the present embodiment may be blended with other resins and may be then used. Examples of such other resins may include polyamide, polyacetal, modified polyphenylene ether, polyethylene terephthalate, and polybutylene terephthalate. Moreover, additives such as an antioxidant, a processing stabilizer, a light stabilizer, a polymerized metal-deactivating agent, a flame retardant, a lubricant, an antistatic agent, a surfactant, an antibacterial agent, a mold release agent, an ultraviolet absorber, a plasticizer, and a compatibilizer, may also be mixed with the present thermoplastic resin.

Examples of the antioxidant may include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxy-benzylphosphonate-diethyl ester, tris(3,5-di-tert-butyl-4-hydroxybenzyl)isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane. The content of the antioxidant in the thermoplastic resin is preferably 0.001 to 0.3 parts by weight, with respect to 100 parts by weight of the thermoplastic resin.

Examples of the processing stabilizer may include a phosphorus-based processing heat stabilizer and a sulfur-based processing heat stabilizer. Examples of the phosphorus-based processing heat stabilizer may include phosphorous acid, phosphoric acid, phosphonous acid, phosphonic acid, and esters thereof. Specific examples may include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritoldi phosphite, 2,2-methylenebis(4,6-di-tert-butylphenyl) octyl phosphite, bis(nonylphenyl)pentaerythritoldi phosphite, bis(2,4-dicumylphenyl)pentaerythritoldi phosphite, bis(2,4-di-tert-butylphenyl)pentaerythritoldi phosphite, distearylpentaerythritoldi phosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, benzenephosphonate dimethyl, benzenephosphonate diethyl, benzenephosphonate dipropyl, tetrakis(2,4-di-t-butylphenyl)-4,4'-biphenylene diphosphonite, tetrakis(2,4-di-t-butylphenyl)-4,3'-biphenylene diphosphonite, tetrakis(2,4-di-t-butylphenyl)-3,3'-biphenylene diphosphonite, bis(2,4-di-tert-butylphenyl)-4-phenyl-phenyl phosphonite, and bis(2,4-di-tert-butylphenyl)-3-phenyl-phenyl phosphonite. The content of the phosphorus-based processing heat stabilizer in the thermoplastic resin is preferably 0.001 to 0.2 parts by weight with respect to 100 parts by weight of the thermoplastic resin.

Examples of the sulfur-based processing heat stabilizer may include pentaerythritol-tetrakis(3-laurylthiopropionate), pentaerythritol-tetrakis(3-myristylthiopropionate), pentaerythritol-tetrakis(3-stearylthiopropionate), dilauryl-3,3'-thiodipropionate, dimyristyl-3,3'-thiodipropionate, and distearyl-3,3'-thiodipropionate. The content of the sulfur-based processing heat stabilizer in the thermoplastic resin is preferably 0.001 to 0.2 parts by weight with respect to 100 parts by weight of the thermoplastic resin.

The mold release agent is preferably an agent whose 90% by weight or more consists of an ester of alcohol and fatty acid. Specific examples of the ester of alcohol and fatty acid may include an ester of monohydric alcohol and fatty acid, and partial esters or complete esters of polyhydric alcohol and fatty acid. The above-described ester of monohydric alcohol and fatty acid is preferably an ester of monohydric alcohol having 1 to 20 carbon atoms and saturated fatty acid having 10 to 30 carbon atoms. On the other hand, the above-described partial esters or complete esters of polyhydric alcohol and fatty acid are preferably partial esters or complete esters of polyhydric alcohol having 1 to 25 carbon atoms and saturated fatty acid having 10 to 30 carbon atoms.

Specific examples of the ester of monohydric alcohol and saturated fatty acid may include stearyl stearate, palmityl palmitate, butyl stearate, methyl laurate, and isopropyl palmitate. Examples of the partial esters or complete esters of polyhydric alcohol and saturated fatty acid may include complete esters or partial esters of dipentaerythritols, such as stearic acid monoglyceride, stearic acid monoglyceride, stearic acid diglyceride, stearic acid triglyceride, monosorbitate stearate, behenic acid monoglyceride, capric acid monoglyceride, lauric acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and dipentaerythritol hexastearate. The content of such a mold release agent is preferably in the range of 0.005 to 2.0 parts by weight, more preferably in the range of 0.01 to 0.6 parts by weight, and further preferably 0.02 to 0.5 parts by weight, with respect to 100 parts by weight of the thermoplastic resin.

As an ultraviolet absorber, a benzotriazole-based ultraviolet absorber, a benzophenone-based ultraviolet absorber, a triazine-based ultraviolet absorber, a cyclic iminoester-based ultraviolet absorber, a cyanoacrylate-based ultraviolet absorber or the like can be preferably used. Any one of the ultraviolet absorbers may be used alone, or the ultraviolet absorbers may also be used in combination of two or more types.

Examples of the benzotriazole-based ultraviolet absorber may include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidemethyl)-5-methylphenyl]benzotriazole.

Examples of the benzophenone-based ultraviolet absorber may include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxy trihydride benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of the triazine-based ultraviolet absorber may include 2-(4,6-diphenyl-1,3,5-triazin-2-yl)-5-[(hexyl)oxy]-phenol, and 2-(4,6-bis(2,4-dimethylphenyl)-1,3,5-triazin-2-yl)-5-[(octyl)oxy]-phenol.

Examples of the cyclic iminoester-based ultraviolet absorber may include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber may include 1,3-bis-[(2'-cyano-3',3'-diphenylacryloyl)oxy]-2,2-bis[(2-cyano-3,3-diphenylacryloyl)oxy]methyl)propane, and 1,3-bis-[(2-cyano-3,3-diphenylacryloyl)oxy]benzene.

The content of the ultraviolet absorber is preferably 0.01 to 3.0 parts by weight, more preferably 0.02 to 1.0 parts

by weight, and further preferably 0.05 to 0.8 parts by weight, with respect to 100 parts by weight of the thermoplastic resin. If the ultraviolet absorber is used within the range of the aforementioned mixed amount, it is possible to provide sufficient weather resistance to the thermoplastic resin, according to the intended use.

A coating layer, such as an antireflection layer or a hard coating layer, may be established on the surface of the optical molded body, as necessary. The antireflection layer may be either a single layer or a multilayer, or may also be either an organic matter or an inorganic matter. The antireflection layer is preferably an inorganic matter. Specific examples may include oxides or fluorides, such as silicon oxide, aluminum oxide, zirconium oxide, titanium oxide, cerium oxide, magnesium oxide, or magnesium fluoride.

The thermoplastic resin according to the present embodiment has a high refractive index and a low Abbe number. Accordingly, the thermoplastic resin according to the present embodiment can be advantageously used for the intended uses of structural materials or functional materials for optical lenses, transparent conductive substrates used for liquid crystal displays, organic EL displays, solar cells, etc., and optical components such as optical disks, liquid crystal panels, optical cards, sheets, films, optical fibers, connectors, evaporated plastic reflectors and displays.

The thermoplastic resin according to the embodiment is suitable as a material for, in particular, optical lens. Since the thermoplastic resin according to the embodiment has physical properties such as high refractive index, low Abbe number, small absolute value of birefringence strength, when the present thermoplastic resin is used as an optical lens, it can be used in the field in which expensive high-refractive-index glass lenses have been conventionally used, such as telescopes, binoculars and TV projectors, and thus, it is extremely useful. The optical lens is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Among the optical lenses, the aspherical lens is particularly useful as a camera lens.

The optical lens is molded by any given method, such as, for example, an injection molding method, a compression molding method or an injection compression molding method. By using the thermoplastic resin according to the present embodiment, a high-refractive-index, low-birefringence aspheric lens, which is a glass lens that is technically difficult to be processed, can be more easily obtained.

Using the thermoplastic resin according to the embodiment, an optical film may be produced. Since such a film is excellent in terms of transparency and heat resistance, it can be preferably used as a film for liquid crystal substrates, optical memory cards, etc.

In order to avoid the mixing of foreign matters into the optical molded body as much as possible, the molding environment must be naturally a low-dust environment, and the class is preferably 6 or less, and more preferably 5 or less.

Examples

Hereinafter, the present invention will be described in detail in the following examples. However, the content of the present invention is not limited by these examples.

(Example 1)

The following raw materials, namely, 25.3406 g (0.0429 mol) of (9,9-bis(4-(2-hydroxyethoxy)-3-phenylphenyl) fluorene) [BPPEF] having the structural formula shown in the following Table 1, 8.7248 g (0.0184 mol) of 2,2'-([9,9'-biphenanthrene]-10,10'-diylbis(oxy))bis(ethan-1-ol) [BIPOL-2EO] having the structural formula shown in the following Table 1, 13.4564 g (0.0628 mol) of diphenyl carbonate (DPC), and $0.4325 \times 10^{-4}$ g ($0.51484 \times 10^{-6}$ mol) of sodium hydrogen carbonate were placed in a 300-mL reactor equipped with a stirrer and a distillation apparatus, and the inside of the reaction system was set to be 101.3 kPa nitrogen atmosphere.

This reactor was immersed in an oil bath heated to 180°C, and a transesterification reaction was initiated. Five minutes after initiation of the reaction, stirring was initiated. Then, 20 minutes after initiation of the stirring, the pressure was reduced from 101.3 kPa to 93.33 kPa over 10 minutes. Then, 10 minutes after the pressure reduction, the temperature of the oil bath was increased to 190°C over 10 minutes. Further, 10 minutes after the temperature increase, the pressure was reduced from 93.33 kPa to 26.66 kPa over 10 minutes. Thereafter, the temperature was increased from 190°C to 210°C over 20 minutes, and the pressure was further reduced to 24.00 kPa. Then, the temperature was increased to 220°C over 10 minutes, and the pressure was further reduced to 20.00 kPa. Thereafter, the temperature was increased to 240°C over 10 minutes, and at the same time, the pressure was reduced to 17.33 kPa. Then, 30 minutes later, the pressure was reduced to 0 kPa. The reaction mixture was retained in this state for 30 minutes, nitrogen gas was then introduced into the reaction system, and the pressure was returned to 101.3 kPa, thereby obtaining a polycarbonate resin.

(Examples 2 to 5 and Comparative Examples 1 to 3)

Using the compounds shown in Table 1 as raw materials, individual polycarbonate resins were produced in the same manner as that of Example 1. The compositions of the obtained resins are shown in Table 1.

[Table 1]

| | BIPOL-2EO 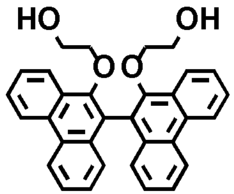 | BINOL-2EO 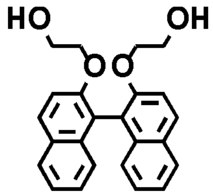 | OPPFL(BPPEF) 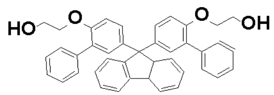 | BPEF 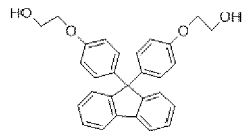 | NOLE 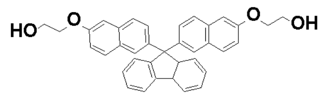 | BINOL-DC 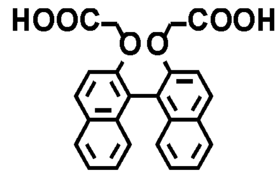 |
|---|---|---|---|---|---|---|
| | [mol%] | [mol%] | [mol%] | [mol%] | [mol%] | [mol%] |
| Ex. 1 | 30 | 0 | 70 | 0 | 0 | 0 |
| Ex. 2 | 33 | 25 | 42 | 0 | 0 | 0 |
| Ex. 3 | 33 | 25 | 0 | 42 | 0 | 0 |
| Ex. 4 | 20 | 2 | 33 | 0 | 0 | 45 |
| Ex. 5 | 30 | 0 | 0 | 70 | 0 | 0 |
| Comp. Ex. 1 | 0 | 30 | 70 | 0 | 0 | 0 |
| Comp. Ex. 2 | 0 | 35 | 18 | 0 | 47 | 0 |
| Comp. Ex. 3 | 0 | 30 | 0 | 70 | 0 | 0 |

Herein, in Table 1, each numerical value (mol %) means the percentage (mol %) of the constituent unit derived from each compound, when the total of the constituent units derived from the compounds shown in Table 1 comprised in the obtained resin is set to be 100 mol %. That is to say, when the total of the constituent units derived from BIPOL-2EO and BPPEF comprised in the resin is set to be 100 mol %, the resin of Example 1 comprises 30 mol % of the constituent unit derived from BIPOL-2EO and 70 mol % of the constituent unit derived from

BPPEF.

The physical properties of the resins obtained in the examples and the comparative examples are shown in Table 2. Individual physical properties were measured by the following methods.

(1) Refractive index (nD)

The resin obtained in each of the examples and the comparative examples was molded according to JIS B 7071-2: 2018, to obtain a V block, which was then used as a test piece. The refractive index was measured at 23°C using a refractometer (KPR-3000, manufactured by Shimadzu Corporation).

(2) Abbe number (ν)

Regarding a test piece (V block) similar to that used in the measurement of the refractive index, the refractive indexes at wavelengths of 486 nm, 589 nm, and 656 nm were measured at 23°C using a refractometer. Thereafter, the Abbe number was calculated according to the following equation:

$$\nu = (nD-1)/(nF-nC),$$

wherein

nD: refractive index at a wavelength of 589 nm,
nC: refractive index at a wavelength of 656 nm, and
nF: refractive index at a wavelength of 486 nm.

(3) Glass transition temperature (Tg)

The glass transition temperature (Tg) was measured according to JIS K7121-1987, using a differential scanning calorimeter by a temperature-increasing program of 10°C/min.
Differential scanning calorimeter: X-DSC7000, manufactured by Hitachi High-Tech Science Corporation

(4) Birefringence strength

- Molding of test piece

The resin obtained in each of the examples and the comparative examples was dissolved in dichloromethane, and was then volatilized and dried in a mirror surface stand to produce a film having a thickness of 100 μm.

- Measurement of birefringence:

The aforementioned film test piece was stretched, and the birefringence at 450 nm was measured.

Measurement apparatus: JASCO Spectroellipsometer M-220
Measurement conditions: The birefringence was measured using a 1.5-fold stretched film.

The birefringence strength is the ratio between the birefringence of the obtained resin at 450 nm and the birefringence of BPEF-derived polycarbonate (homo body) at 450 nm.

(5) Weight average molecular weight

The weight average molecular weight of the resin obtained in each of the examples and the comparative

examples was measured by applying gel permeation chromatography (GPC) and then calculating the weight average molecular weight in terms of standard polystyrene. The used apparatus, the used columns and measurement conditions are as follows.

- GPC apparatus: HLC-8420GPC, manufactured by Tosoh Corporation
- Columns: TSKgel SuperHM-M x 3, manufactured by Tosoh Corporation

  TSKgel guard column SuperH-H x 1, manufactured by Tosoh Corporation
  TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

(6) Percentage of low-molecular-weight compounds

The percentage of low-molecular-weight compounds (i.e. compounds having a molecular weight of less than 1000) in the thermoplastic resin was calculated using the results of the GPC analysis. The method of the GPC analysis is as described above regarding the weight average molecular weight (Mw). Herein, the percentage of the low-molecular-weight compounds means the percentage of the total of peak areas of compounds having a molecular weight of less than 1000 to the total of all peaks areas when the thermoplastic resin is subjected to GPC analysis. Therefore, the percentage of low-molecular-weight compounds (CLWC) was calculated according to the following formula:

[Expression 3]

$$\text{CLWC (\%)} = \frac{\text{Total of peak areas of compounds having molecular weight of less than 1000 in GPC analysis}}{\text{Total of all peak areas in GPC analysis}} \times 100$$

[Table 2]

| | Refractive index (nD) | Abbe number ($\nu$) | Glass transition temperature (Tg) [°C] | Birefringence strength | Weight average molecular weight (Mw) | Percentage of low-molecular-weight compounds [%] |
|---|---|---|---|---|---|---|
| Ex. 1 | 1.67 | 19.7 | 162 | -0.8 | 36221 | 1.9 |
| Ex. 2 | 1.67 | 18.9 | 155 | 0 | 31439 | 3.2 |
| Ex. 3 | 1.67 | 19.2 | 150 | 0.4 | 32000 | 3.2 |
| Ex. 4 | 1.68 | 18.7 | 160 | 0 | 32876 | 2.9 |
| Ex. 5 | 1.66 | 20.3 | 155 | -0.1 | 27873 | 1.9 |
| Comp. Ex. 1 | 1.65 | 22.1 | 137 | -0.5 | 29734 | 1.8 |
| Comp. Ex. 2 | 1.67 | 19.2 | 160 | 4.1 | 34098 | 2.7 |
| Comp. Ex. 3 | 1.65 | 22.1 | 137 | -0.5 | 29734 | 1.8 |

As shown in Table 2, it is found that the resins of the examples have properties suitable for optical materials, such as high refractive index and low Abbe number. In addition, since the resins of the examples have a preferred range of glass transition temperature (Tg), the molding (e.g. injection molding) of the resins can be successfully carried out. Moreover, since the resins of the examples have a small absolute value of birefringence strength, when such a resin is used for optical lenses, the imaging performance of the obtained optical lens unit is improved, and a clear image can be obtained. Furthermore, since the percentage of low-molecular-weight compounds contained in the resins is in a preferred range, the resins are advantageous in that they are excellent in mechanical strength and bleed-out hardly occurs during molding.

Further, the resins of the examples tended to have a higher percentage of low-molecular-weight compounds comprised in the resins, than the resins of the comparative examples, and this leads to the characteristic of increased plasticity of the resin during molding. Thereby, the speed of molding the resins can be improved, and energy costs can be reduced during molding.

Several embodiments of the present invention have been described. These embodiments are presented as examples and are not intended to limit the scope of the invention. These novel embodiments can be carried out in various other forms, and various omissions, replacements, and modifications can be made in a range that does not depart from the gist of the invention. These embodiments and variations thereof are included in the scope and gist of the invention, and are also included in the inventions recited in the claims and its equivalents thereof.

## Claims

**1.** A thermoplastic resin, comprising a constituent unit (A) derived from a monomer represented by the following general formula (1) and a constituent unit (C) derived from a monomer represented by the following general formula (3):

[Formula 1]

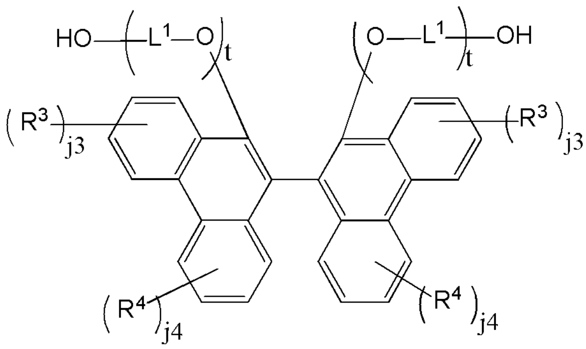

(1)

wherein

$L^1$ each independently represents a divalent linking group;
$R^3$ and $R^4$ each independently represent a halogen atom, or a substituent containing 1 to 20 carbon atoms that optionally contains an aromatic group;
j3 and j4 each independently represent an integer of 0 to 4; and
t represents an integer of 0 or 1; and

[Formula 2]

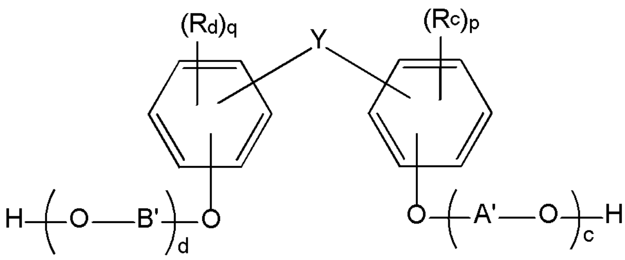

(3)

wherein
A' and B' each independently represent an alkylene group containing 1 to 5 carbon atoms that optionally has a substituent,
$R_c$ and $R_d$ are each independently selected from the group consisting of a halogen atom, an alkyl group containing 1 to 20 carbon atoms that optionally has a substituent, an alkoxyl group containing 1 to 20 carbon atoms that optionally has a substituent, a cycloalkyl group containing 5 to 20 carbon atoms that optionally has a substituent, a cycloalkoxyl group containing 5 to 20 carbon atoms that optionally has a substituent, an aryl group containing 6 to 20 carbon atoms that optionally has a substituent, and a heteroaryl group containing 6 to 20 carbon atoms and

optionally having a substituent, which contains one or more heterocyclic atoms selected from O, N and S,
Y represents a single bond or a divalent linking group,
c and d each independently represent an integer of 0 to 10, and
p and q each independently represent an integer of 0 to 4.

2. The thermoplastic resin according to claim 1, wherein the percentage of the constituent unit (A) is 5 to 95 mol%, and the percentage of the constituent unit (C) is 5 to 95 mol%, with respect to the total of the constituent units (A) and (C).

3. The thermoplastic resin according to claim 1 or 2, wherein $R^3$ and $R^4$ in the general formula (1) each independently represent a methyl group, a phenyl group or a naphthyl group.

4. The thermoplastic resin according to any one of claims 1 to 3, wherein $L^1$ in the general formula (1) each independently represents an alkylene group containing 1 to 5 carbon atoms that optionally has a substituent.

5. The thermoplastic resin according to any one of claims 1 to 4, wherein the monomer represented by the general formula (1) has a structure represented by the following formula (1'):

[Formula 3]

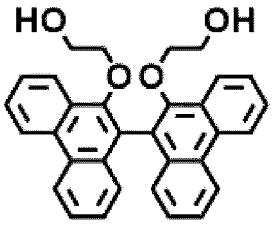

(1')

6. The thermoplastic resin according to any one of claims 1 to 5, wherein Y in the general formula (3) represents a single bond, a fluorene group optionally having a substituent, or a divalent linking group having a structure represented by any of the following formulae (8) to (14):

[Formula 4]

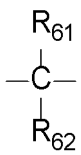
(8)

$-S-$
(9)

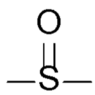
(10)

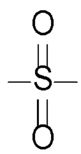
(11)

$-(CH_2)_r-$
(12)

$-O-$
(13)

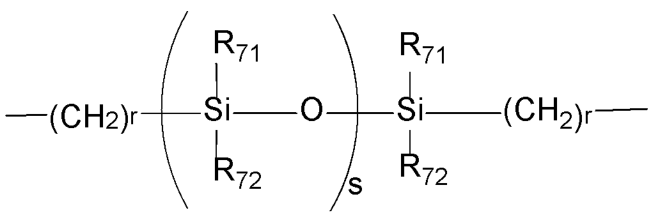
(14)

wherein, in the formulae (8) to (14),
$R_{61}$, $R_{62}$, $R_{71}$ and $R_{72}$ each independently represent a hydrogen atom, a halogen atom, an alkyl group containing 1 to 20 carbon atoms that optionally has a substituent, or an aryl group containing 6 to 30 carbon atoms that optionally has a substituent, or $R_{61}$ and $R_{62}$, or $R_{71}$ and $R_{72}$ bind to each other to form a C1-C20 carbon ring or heterocyclic ring optionally having a substituent, and
r and s each independently represent an integer of 0 to 5000.

7. The thermoplastic resin according to any one of claims 1 to 6, wherein A' and B' in the general formula (3) each independently represent an alkylene group containing 2 or 3 carbon atoms that optionally has a substituent.

8. The thermoplastic resin according to any one of claims 1 to 7, wherein the monomer represented by the general formula (3) has a structure represented by the following general formula (IV):

[Formula 5]

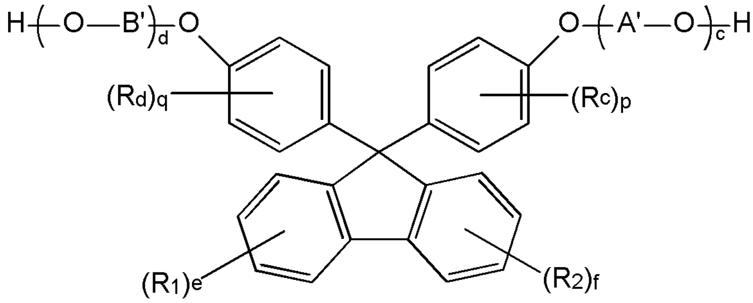

(IV)

wherein

A', B', $R_c$, $R_d$, c, d, p and q are as defined in the general formula (3);
$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to 20 carbon atoms, and each of these optionally has a substituent; and
e and f each independently represent an integer of 0 to 4.

9. The thermoplastic resin according to any one of claims 1 to 8, wherein the monomer represented by the general formula (3) is selected from the group consisting of the following:

[Formula 6]

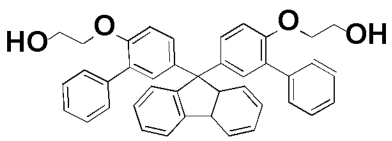

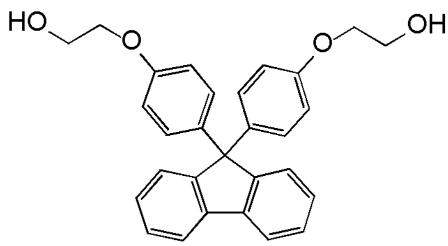

.

10. The thermoplastic resin according to any one of claims 1 to 9, further comprising a constituent unit (B) derived from a monomer represented by the following general formula (2):

[Formula 7]

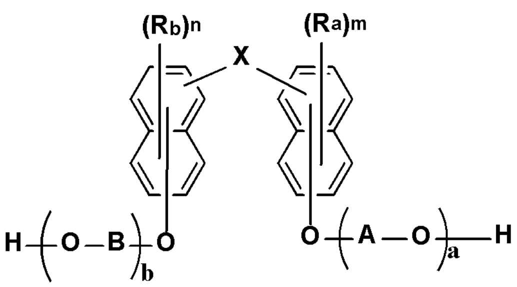

(2)

wherein

A and B each independently represent an alkylene group containing 1 to 5 carbon atoms that optionally has a substituent, a carbonyl group or a combination of these groups,
$R_a$ and $R_b$ are each independently selected from the group consisting of a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms, which contains one or more heterocyclic atoms selected from O, N and S, an aryloxy group containing 6 to 20 carbon atoms, and $-C\equiv C-R_h$, and each of these optionally has a substituent,
$R_h$ represents an aryl group containing 6 to 20 carbon atoms that optionally has a substituent, or a heteroaryl group containing 6 to 20 carbon atoms and optionally having a substituent, which contains one or more heterocyclic atoms selected from O, N and S,
X represents a single bond or a divalent linking group,
a and b each independently represent an integer of 0 to 10, and
m and n each independently represent an integer of 0 to 6.

**11.** The thermoplastic resin according to claim 10, wherein the percentage of the constituent unit (A) is 10 to 35 mol %, the percentage of the constituent unit (B) is 20 to 50 mol %, and the percentage of the constituent unit (C) is 10 to 45 mol %, with respect to the total of the constituent units (A), (B) and (C).

**12.** The thermoplastic resin according to claim 10 or 11, wherein X in the general formula (2) each independently represents a single bond or a fluorene group optionally having a substituent.

**13.** The thermoplastic resin according to any one of claims 10 to 12, wherein the monomer represented by the general formula (2) has a structure represented by the following general formula (II) or (III):

[Formula 8]

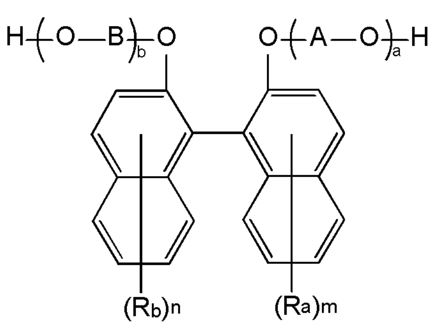

(II)

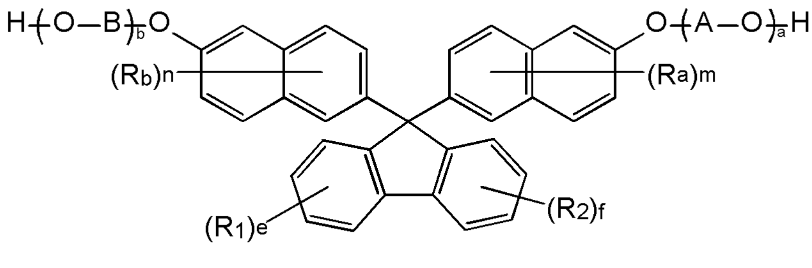

(III)

wherein

A, B, $R_a$, $R_b$, a, b, m and n are as defined in the general formula (2);
$R_1$ and $R_2$ each independently represent an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, or an aryloxy group containing 6 to

20 carbon atoms, and each of these optionally has a substituent; and
e and f each independently represent an integer of 0 to 4.

**14.** The thermoplastic resin according to any one of claims 10 to 13, wherein the monomer represented by the general formula (2) is selected from the group consisting of the following:

[Formula 9]

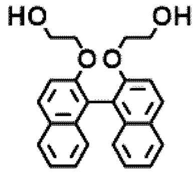

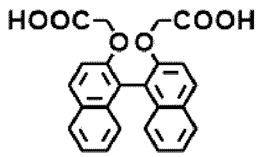

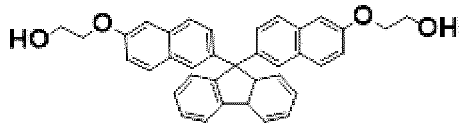

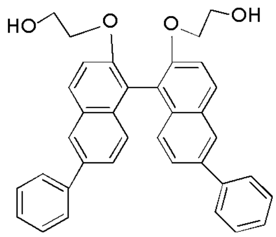

.

**15.** The thermoplastic resin according to any one of claims 10 to 14, wherein the birefringence strength is greater than -0.5 and 0.5 or less.

**16.** The thermoplastic resin according to any one of claims 10 to 15, wherein the percentage of molecules having a molecular weight (Mw) of less than 1000 in the thermoplastic resin is 1.9% or more, and
the percentage of the molecules having a molecular weight of less than 1000 (CLWC) is calculated according to the following formula:

[Expression 1]

$$\mathrm{CLWC}\ (\%) = \frac{\text{Total of peak areas of compounds having molecular weight of less than 1000 in GPC analysis}}{\text{Total of all peak areas in GPC analysis}} \times 100$$

**17.** The thermoplastic resin according to any one of claims 1 to 16, wherein the thermoplastic resin is selected from the group consisting of a polycarbonate resin, a polyester resin and a polyester carbonate resin.

**18.** An optical member comprising the thermoplastic resin according to any one of claims 1 to 17.

**19.** The optical member according to claim 18, which is an optical lens.

**INTERNATIONAL SEARCH REPORT**

International application No. **PCT/JP2023/026186**

**A. CLASSIFICATION OF SUBJECT MATTER**

***C08G 64/00***(2006.01)i; ***C08G 63/00***(2006.01)i; ***C08G 63/672***(2006.01)i; ***G02B 1/04***(2006.01)i
FI: C08G64/00; C08G63/00; C08G63/672; G02B1/04

According to International Patent Classification (IPC) or to both national classification and IPC

**B. FIELDS SEARCHED**

Minimum documentation searched (classification system followed by classification symbols)

C08G64/00; C08G63/00; C08G63/672; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2021/220811 A1 (TEIJIN LTD.) 04 November 2021 (2021-11-04) claims, formulae (4), (7), (8), (9), paragraphs [0027], [0061], [0070], [0085], [0086], examples 1-4 | 1-19 |
| A | WO 2019/044875 A1 (MITSUBISHI GAS CHEMICAL COMPANY, INC.) 07 March 2019 (2019-03-07) | 1-19 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 September 2023** | **03 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/026186**

| Patent document cited in search report | Publication date (day/month/year) | Patent family member(s) | Publication date (day/month/year) |
|---|---|---|---|
| WO 2021/220811 A1 | 04 November 2021 | CN 115461388 A<br>KR 10-2023-0008118 A<br>TW 202206494 A | |
| WO 2019/044875 A1 | 07 March 2019 | US 2020/0181325 A1<br>EP 3677615 A1<br>KR 10-2020-0041975 A<br>CN 111094389 A<br>KR 10-2023-0019988 A<br>TW 201920353 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5245824 B
- JP 6025398 A
- WO 2021220811 A